# EUROPÄISCHE PATENTSCHRIFT

(11) **EP 0 568 139 B1**
(45) Veröffentlichungstag und Bekanntmachung des Hinweises auf die Patenterteilung: **18.12.1996**
(21) Anmeldenummer: 93201134.9
(22) Anmeldetag: 20.04.1993
(51) Int. Cl.: H02G 1/12

(54) **Vorrichtung zum Abisolieren von Runddrähten**
Device for stripping of round wires
Procédé de dénudage de fils ronds

(30) Priorität: 27.04.1992 CH 1345/92
(43) Veröffentlichungstag der Anmeldung: 03.11.1993
(73) Patentinhaber: Meteor Maschinen AG, 8604 Volketswil (CH)
(72) Erfinder: Arnold, Ernst, CH-8107 Buchs (CH)
(74) Vertreter: EGLI-EUROPEAN PATENT ATTORNEYS

(56) Entgegenhaltungen:
- EP-A- 0 364 006
- DE-A- 3 515 223
- US-A- 4 352 305

## Beschreibung

Die Erfindung betrifft eine Vorrichtung zum Abisolieren von Runddrähten mit den im Oberbegriff des Anspruchs 1 angeführten Merkmalen.

Aus der EP-A-0 364 006, von der die Erfindung ausgeht, ist eine Vorrichtung zum Abisolieren von lackisolierten Runddrähten bekannt, deren Werkzeuge auf Werkzeugträgern angeordnet und von einem Antrieb mit Drehwelle aktivierbar sind und zur Abspanung der Isolierung um den Draht rotieren. Dabei kann die Drehwelle Schwenklager für die Werkzeugträger aufweisen, über welche die Werkzeuge, vorzugsweise drei Messer, auf den Drahtdurchmesser zugestellt werden. Auf der Welle ist ein axial verschiebbarer Verstellkonus angeordnet, der die schwenkbaren Werkzeugträger an ihren den Werkzeugen abgewandten Enden abstützt. Dem Verstellkonus ist eine Zustellmechanik mit einem Pneumatikzylinder zugeordnet, der die radial zustellbaren Werkzeuge in eine durch den Drahtdurchmesser vorbestimmte Position bringt. Das Gehäuse der Abisoliervorrichtung weist einen Schlitten auf, der gegen eine stationäre Vorrichtung, beispielsweise eine Wickelmaschine, relativ verschiebbar ist.

Es sind auch Abisoliergeräte bekannt, die gegebenenfalls auch als Verdrillgeräte verwendet werden können und die einen Messerkopf aufweisen, der auf eine Antriebswelle aufgesteckt wird und dessen Messer durch Rotation des Messerkopfes aufgrund der Fliehkraft an den Drahtdurchmesser zugestellt werden. Durch überlagerte Rotation und Längsbewegung der Messer gegenüber dem Draht erfolgt dessen Abisolierung.

Derartige Abisoliervorrichtungen sind als separate Zusatzgeräte ausgebildet, die bei einer Mehrfachwickelmaschine für elektrische Spulen auf einem zusätzlichen Träger angeordnet sind, welcher zusammen mit den Abisoliergeräten gegenüber einem zweiten, die Drahtführer tragenden Träger der Wickelmaschine relativ verschiebbar ist. Dadurch wird meist ein großer Abstand zwischen der Abisoliervorrichtung und dem Drahtführer, der den Draht zu den Anschlüssen der elektrischen Spule führt, erforderlich, und daher muß der im Toleranzbereich veränderbare Drahtdurchmesser und der unterschiedliche Aufbau der Wicklung berücksichtigt werden, so daß bei langer Drahtführung sowohl die minimalen als auch die maximalen Toleranz-Extremwerte aufaddiert den Spulendurchmesser so beeinflussen können, daß durch ungenau an die Anschlußteile zugeführte abisolierte Drahtstücke elektrisch fehlerhafte Spulen entstehen können.

Der Erfindung liegt die Aufgabe zugrunde, eine Abisoliervorrichtung für Runddrähte, insbesondere im Feindrahtbereich, in eine Spulenwickelmaschine derart zu integrieren, daß eine Positionierung der abisolierten Drahtstücke beim Erreichen der vorgesehenen Windungszahl genau an den entsprechenden Anschlußteilen der Spule, auch unter Berücksichtigung der üblichen Fertigungstoleranzen des Drahtes, gewährleistet ist.

Diese Aufgabe wird erfindungsgemäß durch die im Anspruch 1 angegebenen Merkmale gelöst. Weiterbildungen der Erfindung sind in den Unteransprüchen gekennzeichnet.

Durch die Zusammenfassung des Abisoliergerätes mit dem Drahtführer zu einer Einheit entfällt die sonst erforderliche relative Verschiebung zwischen dem Abisoliergerät und dem Drahtführer, so daß diese Fehlerquelle eliminiert ist. Die bisher meist erforderliche Länge der Drahtführung zwischen dem abisolierten Drahtstück-Anfang und dem entsprechenden Anschlußteil der Spule verkürzt sich auf etwa 1/5 bis 1/6, wodurch auch die Bewicklungszeit wesentlich herabgesetzt wird, da die Abisolierung und die Zuführung des abisolierten Drahtstückes an das Anschlußteil der Spule bei herabgesetzter Wickelgeschwindigkeit erfolgt.

Die Veränderung des Spulendurchmessers während der Bewicklung,insbesondere eine genaue Anbringung des abisolierten Drahtstückes an das entsprechende Anschlussteil der Spule wird durch eine computergesteuerte Verschiebung der Abisolier-/Drahtführer-Einheit gegen die Laufrichtung des Drahtes genau kompensiert.

Die unterschiedlichen Anordnungen der Anschlussteile an den elektrischen Spulen, insbesondere radial bzw. axial zur Spule, und dadurch unterschiedlich erforderliche Drahtlängen zwischen dem Drahtführer-Austritt und dem Anschlussteil sind über frei programmierbare X-,Y- und Z-Achsen der Abisolier-/Drahtführer-Einheit genau erfassbar.

In der Zeichnung sind Ausführungsbeispiele des Erfindungsgegenstandes schematisch dargestellt.

Es zeigen
Fig.1 einen Längsschnitt durch eine erfindungsgemässe Abisolier-/Drahtführer-Einheit, integriert in eine angedeutete Wickelmaschine für elektrische Spulen mit radial angeordneten Anschlussteilen,
Fig.1A und 1B Details gemäss Fig.1 und
Fig.2 einen Längsschnitt durch die Abisolier-/Drahtführer-Einheit bei der Bewicklung von Spulen mit axial angeordneten Anschlussteilen.

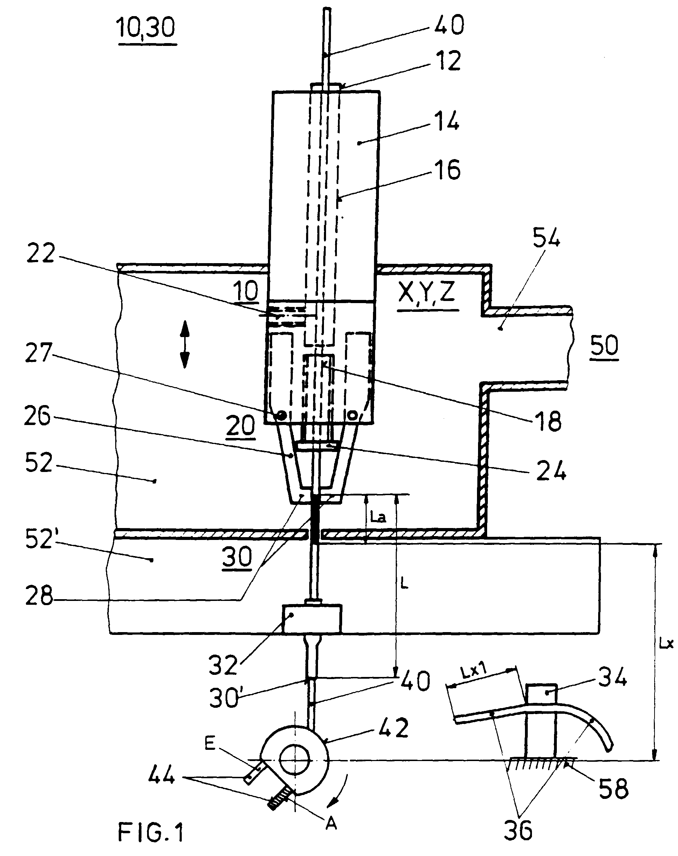

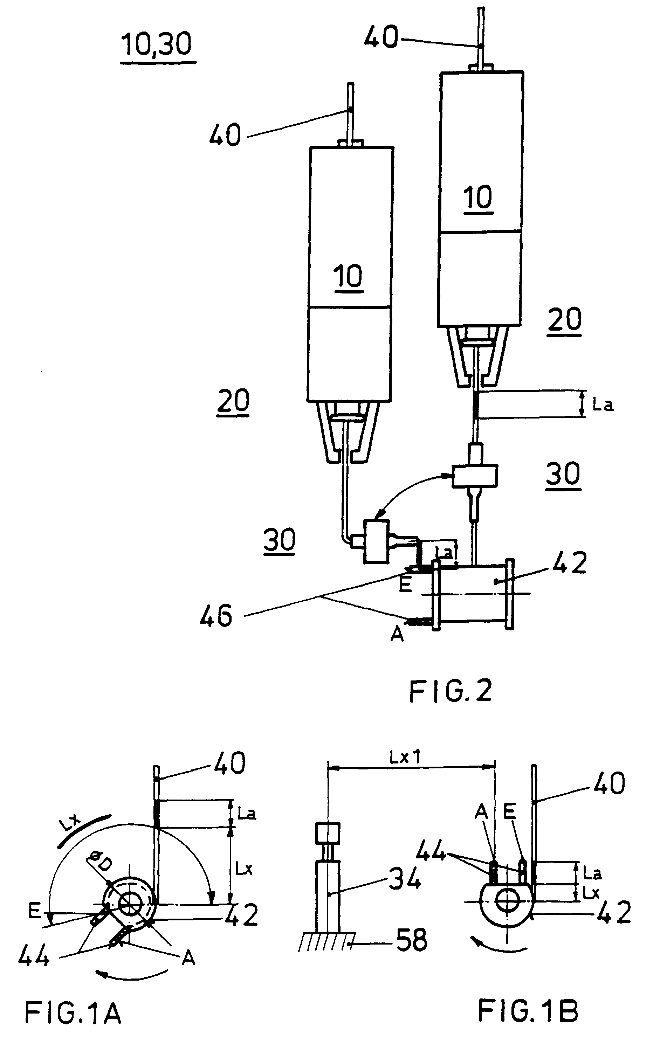

Gemäss Fig.1, 1A und 1B ist eine Abisolier-/Drahtführer-Einheit mit den Bezugszahlen 10,30 bezeichnet, die auf einem zweiteiligen Träger 52,52' einer Spulenwickelmaschine 50 angeordnet ist und eine Anzahl, beispielsweise sechs Wickelstellen aufweist. Der Träger 52,52' erstreckt sich über die Gesamtlänge der Wickelstellen, deren jeder eine Abisolier-/Drahtführer-Einheit 10,30 zugeordnet ist. Fig.1 zeigt die letzte am rechten Ende der Wickelmaschine 50 angeordnete Wickelstelle. Das obere Trägerteil 52 ist hohl ausgebildet und über einen Stutzen 54 mit einer (nicht dargestellten) Einrichtung zum Absaugen der abisolierten Isolationsreste verbunden. Das Abisoliergerät 10 ist am oberen Trägerteil 52 angeordnet, wobei ein Abisolierkopf 20 auf eine hohl ausgebildete Rotorwelle 16 eines Elektromotors 14 aufgesteckt und mittels einer Klemmschraube 22 gesichert ist. Der Abisolierkopf 20 mit mindestens drei aktivierbaren um den Draht 40 rotierenden spanabhebenden Werkzeugen, vorzugsweise Messern 28, weist Kipphebel 26 auf, die in Drehpunkten 27 schwenkbar sind und als Messerhalter dienen. Die Zustellung der Messer 28 an den Drahtdurchmesser erfolgt durch Drehung des Messerkopfes 20 verursachte Fliehkraft und ist durch eine Anschlagschraube 24 begrenzt.

Am unteren Trägerteil 52' werden die Drahtführer 30 mittels Halter 32 angeordnet, wobei die Trägerteile 52,52' mit den Abisolier-/Drahtführer-Einheiten 10,30 entlang der X-,Y- und Z-Achsen frei programmierbar sind.

Der Abstand L zwischen dem Zentrum der Abisoliermesser 28 und dem Drahtführer-Austritt 30' ist entsprechend den Abmessungen der zu bewickelnden Spule 42 fest einstellbar. Die Länge des abzuisolierenden Drahtstückes La, welches zur Kontaktierung des Drahtanfangs A bzw.des Drahtendes E mit den entsprechenden Anschlussteilen 44,46 der Spule 42 dient, ist ebenfalls programmierbar.

Der als Runddraht ausgebildete Wickeldraht 40 wird durch eine Drahtöse 12 und die hohl ausgebildete Rotorwelle 16 des Elektromotors 14 in eine Hohlwelle 18 des Abisolierkopfes 20 zwischen den Abisoliermessern 28 und durch den röhrchenförmigen Drahtführer 30 zu den entsprechenden Anschlussteilen 44,46 der elektrischen Spule 42 geführt. Durch eine Relativ-Bewegung des rotierenden Abisolierkopfes 20 entgegen der Drahtlaufrichtung wird bei stillstehender Spule 42 eine vorbestimmte Drahtstück-Länge La der Isolation abisoliert.

Bei Wicklungsbeginn wird in der Länge ein veränderbarer Drahtabschnitt Lx1 zwischen dem abisolierten Drahtstückanfang und einer an einer Grundplatte 58 der Wickelmaschine 50 angeordnete Drahthalterung 34 (Parkierstift) derart vorbestimmt, dass das abisolierte Drahtstück La an dem entsprechenden Anschlussteil 44,46 der elektrischen Spule 42 anliegt. In Fig.1 ist der an der Drahthalterung 34 gehaltene Drahtrest 36 bereits abgetrennt, nachdem der Wicklungsanfang A am entsprechenden radial angeordneten Anschlussteil 44 befestigt, vorzugsweise angedrillt ist. Nach Beendigung der Spulenwicklung gemäss den Fig.1 und Fig.1A wird der in der Länge veränderbare Drahtabschnitt Lx derart programmiert, dass das nachfolgende abisolierte Drahtstück La an den Anschlussteil 44 zu liegen kommt, wobei die durch den veränderten Spulendurchmesser D variierte Drahtabschnitt-Länge Lx durch Rückverschiebung der Abisolier-/Drahtführer-Einheit 10,30 gegen die Drahtlaufrichtung kompensiert wird.

Fig.1 und 1A zeigen eine vorbestimmte Anhalteposition der Spule 42, bei welcher das Drahtstück La durch Rückverschiebung der Abisolier-/Drahtführer-Einheit 10,30 bei gleichzeitiger Drehung des Abisoliergerätes 10 bereits abisoliert ist. Durch Weiterdrehung der Spule 42 aus der Anhalteposition wird der veränderte Drahtabschnitt Lx derart auf die Spule 42 aufgewickelt, dass das nachfolgende abisolierte Drahtstück La gemäss Fig.1B genau an den Anschlussteil 44 zu liegen kommt und gleichzeitig die vorbestimmte Windungszahl der Spule 42 erreicht ist. Nachfolgend wird das abisolierte Drahtstück La an das Anschlussteil 44 beispielsweise durch Andrillen befestigt.

Fig.2 zeigt eine elektrische Spule 42 mit axial angeordneten Anschlussteilen 46, wobei durch Weiterdrehung der Spule 42 analog zur Fig.1 aus der Anhalteposition der in der Länge veränderbare Drahtabschnitt Lx derart aufgewickelt wird, dass das abisolierte Drahtstück La an das entsprechende Anschlussteil 46 als Drahtende E zu liegen kommt, nachfolgend der Drahtführer 30 um einen vorbestimmten Winkel, vorzugsweise um 90°, gekippt und das abisolierte Drahtstück La an das Anschlussteil 46 befestigt wird. Der in der Drahthalterung 34 eingeklemmte Drahtrest ist bereits ausgeworfen.

## Patentansprüche

1. Vorrichtung zum Abisolieren von lack- und/oder kunststoff-isolierten Runddrähten mittels eines Abisoliergerätes mit mindestens drei aktivierbaren, um den Draht (40) rotierenden, spanabhebenden Werkzeugen, welche dem jeweiligen Drahtdurchmesser entsprechend eingestellt werden und wobei zur Bewicklung einer elektrischen Spule (42) Drahtführungen und ein Drahtführer (30) vorgesehen sind, **dadurch gekennzeichnet**, daß das Abisoliergerät (10) zusammen mit dem Drahtführer (30) auf einem gemeinsamen Träger (52,52') mindestens eine in eine Spulenwickelmaschine (50) integrierte Abisolier-/Drahtführer-Einheit (10,30) bildet, wobei zwischen dem Zentrum der spanabhebenden Werkzeuge (28) und dem Drahtführer-Austritt (30') entsprechend der zu bewickelnden elektrischen Spule (42) ein Abstand (L) fest einstellbar ist, und daß ein längenveränderbarer, zwischen einem abisolierten Drahtstück-Anfang (La) und einem Anschlußteil (44,46) der elektrischen Spule (42) verlaufender Drahtabschnitt (Lx) derart zuführbar ist, daß das abisolierte Drahtstück (La) an das Anschlußteil (44,46) bei gleichzeitigem Erreichen der vorbestimmten Windungszahl zu liegen kommt.

2. Vorrichtung nach Anspruch 1, **dadurch gekennzeichnet**, daß die Abisolier-/Drahtführer-Einheit (10,30) einen Elektromotor (14) mit einer hohl ausgebildeten Rotorwelle (16) aufweist.

3. Vorrichtung nach Anspruch 1, **dadurch gekennzeichnet**, daß auf dem Träger (52,52') der Spulenwickelmaschine (50) eine Anzahl, beispielsweise sechs, Abisolier-/Drahtführer-Einheiten (10,30) angeordnet sind.

4. Vorrichtung nach Anspruch 1 oder 3, **dadurch gekennzeichnet**, daß ein dem Abisoliergerät (10) zugeordnetes Trägerteil (52) hohl ausgebildet und über einen Stutzen (54) mit einer Absaugeinrichtung verbunden ist.

5. Vorrichtung nach einem der Ansprüche 1 bis 4, **dadurch gekennzeichnet**, daß zur Kompensation der durch den anwachsenden Spulendurchmesser (D) veränderbaren Länge des Drahtabschnittes (Lx) die Abisolier-/Drahtführer-Einheit (10,30) gegen die Laufrichtung des Drahtes (40) zurück verschiebbar ist.

6. Vorrichtung nach einem der Ansprüche 1 bis 5, **dadurch gekennzeichnet**, daß die Abisolier-/Drahtführer-Einheit (10,30) entlang der X-, Y- und Z-Achsen frei programmierbar ist.

7. Vorrichtung nach einem der Ansprüche 1 bis 6, **dadurch gekennzeichnet**, daß der Drahtführer (30) um einen vorbestimmten Winkel, vorzugsweise um 90°, kippbar ist.

## Claims

1. Device for stripping enamel- and/or plastic-insulated round wires using a stripping instrument having at least three activatable cutting tools rotating about the wire (40), which are set in accordance with the respective wire diameter, and wire guides and a wire guider (30) being provided for winding an electrical coil (42), characterized in that the stripping instrument (10) together with the wire guider (30) on a common support (52, 52') form at least one stripping/wire-guider unit (10, 30) integrated into a coil winding machine (50), a distance (L) being definitively settable between the centre of the cutting tools (28) and the wire-guider exit (30') in accordance with the electrical coil (42) to be wound, and in that a changeable-length wire section (Lx), running between a stripped wire-portion start (La) and a connection part (44, 46) of the electrical coil (42), being feedable in such a way that the stripped wire portion (La) comes to abut against the connection part (44, 46) on simultaneous achievement of the predetermined winding number.

2. Device according to Claim 1, characterized in that the stripping/wire-guider unit (10, 30) has an electric motor (14) with a hollow-designed rotor shaft (16).

3. Device according to Claim 1, characterized in that a number, for example six, of the stripping/wire-guider units (10, 30) are arranged on the support (52, 52') of the coil winding machine (50).

4. Device according to Claim 1 or 3, characterized in that a support part (52) assigned to the stripping instrument (10) is of hollow design and is connected via a connector (54) to a suction device.

5. Device according to one of Claims 1 to 4, characterized in that, in order to compensate for the changeable length of the wire section (Lx) as a result of the increasing coil diameter (D), the stripping/wire-guider unit (10, 30) can be displaced backwards with respect to the running direction of the wire (40).

6. Device according to one of Claims 1 to 5, characterized in that the stripping/wire-guider unit (10, 30) is freely programmable along the X, Y and Z axes.

7. Device according to one of Claims 1 to 6, characterized in that the wire guider (30) can be tilted by a predetermined angle, preferably 90°.

## Revendications

1. Dispositif pour le dénudage de fils de section circulaire isolés à l'aide d'une laque et/ou d'une matière synthétique au moyen d'un appareil de dénudage comprenant au moins trois outils enlevant les copeaux, aptes à être activés et tournant autour du fil (40), qui peuvent être réglés en correspondance au diamètre de fil respectif, et dans lequel, pour le bobinage d'une bobine électrique (42), on prévoit des glissières pour le guidage du fil et un guide-fil (30), caractérisé en ce que l'appareil de dénudage (10), conjointement avec le guide-fil (30) sur un support commun (52, 52'), forme au moins une unité de dénudage/guide-fil (10, 30) intégrée dans une machine à bobiner (50), dans lequel, entre le centre de l'outil (28) enlevant les copeaux et la sortie (30') du guide-fil, en correspondance à la bobine électrique (42) à bobiner, on peut régler à demeure une distance (L), et en ce qu'une section de fil (Lx) dont la longueur peut être modifiée, s'étendant entre un début de tronçon de fil dénudé (La) et une partie de raccord (44, 46) de la bobine électrique (42), peut être acheminée de telle sorte que le tronçon de fil dénudé (La) vient se disposer contre la partie de raccord (44, 46) lorsqu'on atteint simultanément le nombre de spires prédéterminé.

2. Dispositif selon la revendication 1, caractérisé en ce que l'unité de dénudage/guide-fil (10, 30) présente un moteur électrique (14) comprenant un arbre de rotor (16) réalisé pour être creux.

3. Dispositif selon la revendication 1, caractérisé en ce que, sont disposés sur le support (52, 52') de la machine à bobiner (50), un certain nombre d'unités de dénudage/guide fil (10, 30), par exemple six.

4. Dispositif selon la revendication 1 ou 3, caractérisé en ce qu'une partie de support (52) attribuée à l'outil de dénudage (10) est réalisée pour être creuse et est reliée, via une tubulure (54), à un mécanisme d'aspiration.

5. Dispositif selon l'une quelconque des revendications 1 à 4, caractérisé en ce que, pour compenser la longueur du tronçon de fil (Lx) qui peut être modifiée en augmentant le diamètre (D) de la bobine, l'unité de dénudage/guide-fil (10, 30) peut être repoussée par coulissement dans la direction opposée à celle de défilement du fil (40).

6. Dispositif selon l'une quelconque des revendications 1 à 5, caractérisé en ce que l'unité de dénudage/guide-fil (10, 30) peut être programmée librement le long des axes X, Y et Z.

7. Dispositif selon l'une quelconque des revendications 1 à 6, caractérisé en ce que le guide-fil (30) peut basculer en formant un angle prédéterminé, de préférence de 90°.
